# EUROPÄISCHE PATENTSCHRIFT

(11) **EP 2 188 072 B1**
(45) Veröffentlichungstag und Bekanntmachung des Hinweises auf die Patenterteilung: **21.11.2012**
(21) Anmeldenummer: 08785149.9
(22) Anmeldetag: 28.07.2008
(51) Int. Cl.: B21B 28/00, B24B 5/16, G01N 21/952

(54) **VERFAHREN UND VORRICHTUNG ZUM REINIGEN DER MANTELFLÄCHE EINER WALZE ODER ROLLE**
METHOD AND DEVICE FOR CLEANING THE OUTER SURFACE OF A ROLL OR ROLLER
PROCÉDÉ ET DISPOSITIF DE NETTOYAGE DE LA SURFACE D'ENVELOPPE D'UN CYLINDRE OU D'UN ROULEAU

(30) Priorität: 12.09.2007 AT 14242007
(43) Veröffentlichungstag der Anmeldung: 26.05.2010
(73) Patentinhaber: Siemens VAI Metals Technologies GmbH, 4031 Linz (AT)
(72) Erfinder: HERAC, Ibrisim, A-4053 Haid (AT); HOHENBICHLER, Gerald, A-4484 Kronstorf (AT); KEINTZEL, Georg, A - 4221 Steyregg (AT); SCHIEFER, Jürgen, A-3350 Stadt Haag (AT)
(74) Vertreter: Maier, Daniel Oliver
(86) Internationale Anmeldenummer: PCT/EP2008/006199
(87) Internationale Veröffentlichungsnummer: WO 2009/036838

(56) Entgegenhaltungen:
- EP-A- 0 573 035
- DE-A1- 19 633 855
- JP-A- 5 154 516
- JP-A- 10 192 920
- JP-A- 2000 227 423
- US-A- 5 954 565

## Beschreibung

### Technisches Gebiet

Die Erfindung betrifft ein Verfahren zum Reinigen der Mantelfläche einer Walze oder einer Rolle in Banderzeugungs- und Bandbehandlungsanlagen, wobei Anhaftungen auf der Mantelfläche der Walze oder Rolle mit einer Detektionseinrichtung erkannt werden und ein zur Mantelfläche der Walze oder Rolle anstellbares Reinigungswerkzeug entlang dieser Mantelfläche bewegt wird und diese Anhaftungen bei rotierender Walze oder Rolle beseitigt.

Weiters betrifft die Erfindung eine Reinigungsvorrichtung zum Reinigen der Mantelfläche einer Walze oder einer Rolle in einer Banderzeugungs- und Bandbehandlungsanlage, mit einem Transportschlitten und ein an einem Tragelement befestigtes Reinigungswerkzeug, wobei dem Transportschlitten ein Verstellantrieb zugeordnet ist, der Transportschlitten an mindestens einer Führung verschiebbar angeordnet ist, die parallel zu einer Drehachse der Walze oder Rolle ausgerichtet ist, und wobei zumindest das Tragelement für das Reinigungswerkzeug oder das Reinigungswerkzeug selbst zum Transportschlitten mittels einer Stelleinrichtung relativbeweglich und an diesem befestigt ist.

Ein bevorzugtes Anwendungsgebiet für das erfindungsgemäße Reinigungsverfahren und die erfindungsgemäße Reinigungsvorrichtung sind Treiberrollen eines Treibrollengerüstes in Banderzeugungs- und Bandbehandlungsanlagen, insbesondere bei der Erzeugung und Behandlung von Metallband, vorzugsweise bei der Herstellung von Stahlband in Warm- und Kaltwalzanlagen und nachgeordneten Bandbehandlungseinrichtungen, wie beispielsweise Transporteinrichtungen für Metallbänder auf Rollgängen, weiters in Speichereinrichtung, Reinigungseinrichtung, Beschichtungseinrichtungen, vor und nach thermischen Behandlungseinrichtungen, Verzinkungsanlagen und sonstigen Bandbehandlungseinrichtungen.

### Stand der Technik

Von Weiterverarbeitungsbetrieben werden hohe Anforderungen an die Oberflächenbeschaffenheit der zumeist in Form von Bunden oder Tafeln angelieferten Metallbänder gestellt. Da zu diesem Zeitpunkt Oberflächenfehler nicht mehr beseitigt werden können, muss sowohl während des Walzvorganges als auch beim Transport des Walzbandes durch Behandlungsanlagen in Treibrollengerüsten und bis hin zum Aufwickeln des Walzbandes speziell auf die Reinheit der Walzen, der Transportrollen und Treiberrollen geachtet werden, da diverse produktionsbedingte Ablagerungen an den Rollen zu Schädigungen an der Bandoberfläche führen.

Zur Beseitigung derartiger Anhaftungen von der Mantelfläche einzelner Walzen oder Rollen ist es aus der WO 97/39844 A1 bereits bekannt, eine Oberflächeninspektion der Rolle durchzuführen, bei der beeinträchtigte Bereiche festgestellt und lokalisiert werden. Für die Vermessung der Rollenmantelfläche werden optische, elektromagnetische oder akustische Messverfahren vorgeschlagen. Anschließend wird eine Reinigungseinrichtung zu den ermittelten Positionen geführt und eine örtliche Entfernung der Beeinträchtigungen an der Rollenmantelfläche durchgeführt, beispielsweise durch einen Schleifvorgang oder mittels Laser. Nähere Angaben zum Zusammenwirken der Oberflächeninspektion mit dem nachgeordneten Reinigungsvorgang sind diesem Dokument nicht zu entnehmen. Gleichermaßen fehlt eine maschinenbauliche und steuerungstechnische Auflösung der vielfältigen, jedoch nur kursorisch beschriebenen Lösungsansätze, die ein optimales Zusammenwirken von Detektion und Reinigung an der Rolle jedoch nicht umfasst.

Aus der WO 01/60566 A1 ist eine Poliereinrichtung zum Reinigen einer Rollenmantelfläche bekannt, die an einer parallel zur Rollenachse ausgerichteten Führungsschiene geführt ist und so entlang der gesamten Ballenlänge der Rolle bewegt werden kann. Ein in einer Halterung abgestütztes Polierwerkzeug ist an die Rollenmantelfläche anstellbar, sodass bei rotierender Rolle die gesamte Ballenoberfläche gereinigt werden kann. Eine selektive Reinigung in besonders beeinträchtigten Regionen der Rollenmantelfläche ist mit dieser Poliereinrichtung jedoch nicht möglich, sodass es zwangsweise zu einem hohen Verschleiß des Polierwerkzeuges und der Rolle kommt.

Aus dem Stand der Technik sind weiters Walzenschleifmaschinen bekannt, wie sie in einer Walzenschleiferei zur Instandsetzung abgenützter Walzenoberflächen außerhalb des Walzgerüstes eingesetzt werden. Aus der JP 2000-227423 A ist eine Walzenschleifmaschine dieser Art bekannt, bei der eine Wascheinrichtung, eine Detektionseinrichtung und eine Walzenschleifeinrichtung auf einem parallel zur Walzenachse verfahrbaren, gemeinsamen Schlitten angeordnet sind und somit eine Komplettbearbeitung der Walzenoberfläche in einer Maschine erfolgen kann. Hier wird eine Erneuerung einer im Walzbetrieb abgenützten Walzenkontur mit verringertem Walzendurchmesser durch einen Schleifvorgang am Walzenmantel angestrebt und nicht nur eine oberflächliche Reinigung einer bestehenden Walzenoberfläche.

Eine Walzenschleifeinrichtung, die unmittelbar im Walzgerüst eingesetzt werden kann, ist aus der JP 05-154516 A bekannt. Hier wird, wie in Figur 4 dieses Dokumentes dargestellt, die Walzenkontur der durch die Walzbeanspruchung abgenützten Walze detektiert und anschließend ein Rückschliff durchgeführt.

### Darstellung der Erfindung

Aufgabe der vorliegenden Erfindung ist es daher, die Nachteile des bekannten Standes der Technik zu vermeiden und ein Verfahren und eine Vorrichtung zum Reinigen der Mantelfläche einer Walze oder einer Rolle in Banderzeugungs- und Bandbehandlungsanlagen vorzuschlagen, wobei der Einsatz und der Verschleiß des Reinigungswerkzeuges und die Abnützung bzw. ein mechanischer Abtrag an der Rolle minimiert werden soll. Weiters soll die Reinigung der beeinträchtigten Oberflächenbereiche nur vorgenommen werden, wenn die Anhaftungen ein vorbestimmtes Ausmaß angenommen oder überschritten haben. Die Reinigung soll nur bzw. bevorzugt an den detektierten und damit zu reinigenden Oberflächenbereichen stattfinden. Ein weiteres Ziel der Erfindung ist es, Detektion und Reinigung innerhalb einer möglichst kurzen Zeitspanne durchzuführen.

Diese Aufgabe wird durch ein Verfahren mit den Meshmalen von Anspruch 1 in Kombination gelöst.

Der Vorgang von Detektion und Reinigung erfolgt vorzugsweise in unmittelbar aufeinander folgenden Schritten.

Vorzugsweise wird die Detektionseinrichtung gemeinsam mit dem Reinigungswerkzeug berührend entlang der Mantelfläche der Walze oder Rolle geführt. Durch den berührenden Kontakt von Reinigungswerkzeug und Mantelfläche kommt es zu einer Grundreinigung der Walze oder Rolle, ohne dass dadurch ein merkbarer Verschleiß an der Walze oder Rolle hervorgerufen wird.

Durch den Einsatz einer Detektionseinrichtung zur Inspektion der Walzen- oder Rollenmantelfläche kann die Durchführung eines Reinigungsvorganges am tatsächlichen Bedarf orientiert werden. Die an vielen Produktionsanlagen übliche fallweise Reinigung in Betriebspausen nach visueller Inspektion durch einen Bedienmann oder nach dem vermehrten Auftreten von Fehlern auf der Bandoberfläche entfällt damit.

Zweckmäßig wird ein von der Detektionseinrichtung generiertes und für die ermittelte Anhaftung repräsentatives Signal einer Auswerteeinrichtung zugeführt, dort ausgewertet und in Abhängigkeit von dieser Auswertung die Positionierung des Reinigungswerkzeuges an der Mantelfläche der Walze oder Rolle gesteuert. Die Auswertung in der Auswerteeinrichtung umfasst eine qualitative Beurteilung des für die Anhaftungen repräsentativen Messsignals, speziell dahingehend, ob ein Reinigungsvorgang für die einzelne Anhaftung eingeleitet werden muss oder ob wegen des geringen Ausmaßes der Anhaftung zum gegenwärtigen Zeitpunkt noch verzichtet werden kann. Weiters kann aus dem Messsignal die Zeitdauer des Reinigungsvorganges für die einzelne Anhaftung abgeleitet werden. Zusätzlich wird die Querposition einer zu entfernenden Anhaftung erfasst, sofern der Reinigungsschritt nicht unmittelbar nach der Detektion dieser einen Anhaftung erfolgen soll, sondern erst, sobald ein Großteil oder die gesamte Rolle oder Walze bezüglich Anhaftungen überprüft wurde.

Nach einer ersten Ausführungsform ermöglicht die unmittelbare Auswertung der Messsignale die Durchführung des Reinigungsvorganges noch während des Messdurchlaufes der Reinigungsvorrichtung, ohne mit dieser die zu reinigende Position an der Walze oder Rolle in einem weiteren Durchlauf nochmals ansteuern zu müssen.

Nach einer weiteren Ausführungsform besteht aber auch die Möglichkeit, einen Messdurchlauf und einen Reinigungsdurchlauf, die jeweils die gesamte Mantelfläche der Rolle oder Walze umfassen, in zeitlich aufeinander folgenden Schritten durchzuführen. Hierbei werden mit der Detektionseinrichtung in einer zur Drehachse der Rolle oder Walze parallelen Querfahrt alle zu reinigenden Stellen an der Mantelfläche der Rolle oder Walze detektiert und durch eine QuerpositionsErkennung erfasst und dann bei einem zweiten Durchlauf, vorzugsweise bei der Rückfahrt, durch ausreichendes Andrücken und ausreichend langes Verbleiben des Reinigungswerkzeuges an den zuvor detektierten Stellen gereinigt.

Das für die jeweils ermittelte Anhaftung repräsentative Signal wird mit einem in der Mess- und Regeltechnik üblichen Identifikationsprogramm online ausgewertet. In der einfachsten Version beinhaltet ein solches Programm, die Überprüfung, ob das repräsentative Signal einen gewissen Grenzwert überschreitet, bzw. ob diese Grenzwertüberschreitung für einen signifikanten Zeitraum anhält.

Mit ausgewählten Verfahrensweisen kann das Reinigungswerkzeug optimal eingesetzt werden, wobei darunter zu verstehen ist, dass ein möglichst geringer Verschleiß am Reinigungswerkzeug selbst und an der Walze oder Rolle auftritt.

Eine mögliche Verfahrensweise besteht darin, dass das während des Detektionsvorganges in einem Abstand zur Mantelfläche der Walze oder Rolle gehaltene Reinigungswerkzeug nach der Detektion einer Anhaftung auf der Walze oder Rolle an diese angestellt und diese Anhaftung beseitigt wird. Das Reinigungswerkzeug wird nach der Detektion einer Anhaftung mit einer konstanten Kraft oder mit einem konstanten Druck an die Mantelfläche der Walze oder Rolle angepresst und für eine Zeitspanne in dieser Position gehalten.

Alternativ besteht aber auch die Möglichkeit, dass das Anstellen bzw. Andrücken des Reinigungswerkzeuges an die Rolle oder Walze an allen beim Messdurchlauf vorgemerkten Stellen bei einem zweiten Durchlauf, vorzugsweise bei der Rückfahrt, durchgeführt wird, indem das angepresste Reinigungswerkzeug an allen mit Anhaftungen belegten Querpositionen über jeweils eine Zeitspanne in dieser Position gehalten wird.

Eine bevorzugte Verfahrensweise besteht darin, dass das während des Detektionsvorganges mit einer konstanten Kraft oder einem konstanten Druck an die Mantelfläche der Walze oder Rolle angepresste Reinigungswerkzeug nach der Detektion einer Anhaftung auf der Walze oder Rolle über eine Zeitspanne in dieser Position gehalten wird. Diese Zeitspanne ist entweder fest vorgegeben oder orientiert sich am detektierten Messsignal, das repräsentativ für die Größe/Erhebung der Anhaftung ist und damit eine spezifische Festlegung der Zeitspanne ermöglicht. Die Anpresskraft oder der Anpressdruck sind an der Reinigungsvorrichtung voreingestellt und so bemessen, dass während des kontinuierlichen Messdurchlaufs bis zur Detektion einer Anhaftung eine oberflächliche Grundreinigung der Walze oder Rolle, möglichst mit minimiertem Abrieb an der Mantelfläche erfolgt. Sobald Anhaftungen als zu entfernend erkannt werden, wird der kontinuierliche Messdurchlauf für eine vorbestimmte Zeitspanne unterbrochen, die Reinigung bei der konstanten Kraft oder dem konstanten Druck durchgeführt und der Messdurchlauf anschließend wieder aufgenommen. Solcherart kann mit einem Messdurchlauf über die Walzen- oder Rollenballenlänge auch die Reinigung unmittelbar durchgeführt werden.

Nach einer weiteren bevorzugten Verfahrensweise wird das während des Detektionsvorganges mit einer konstanten Kraft oder einem konstanten Druck an die Oberfläche der Walze oder Rolle angepresste Reinigungswerkzeug nach der Detektion einer Anhaftung auf der Walze oder Rolle mit einer erhöhten Kraft oder einem erhöhten Druck über eine Zeitspanne in dieser Position gehalten. Mit der Erhöhung der Kraft oder des Druckes wird der notwendige Zeitaufwand für den Reinigungsdurchlauf minimiert.

Eine Optimierung des Reinigungsvorganges und eine Vergleichmäßigung des Verschleißes am Reinigungswerkzeug werden erzielt, wenn das Reinigungswerkzeug während der Entfernung einer Anhaftung, d.h. während der Zeitspanne der Reinigung, oszillierend bewegt wird. Das Reinigungswerkzeug wird an jeder detektierten Querposition parallel zur Drehachse der Rolle oder Walze oszillierend bewegt. Der Oszillationshub des Reinigungswerkzeuges beträgt zwischen 2% und 30%, vorzugsweise zwischen 5% und 20% der Breite des Reinigungswerkzeuges gemessen an der Kontaktfläche des Reinigungswerkzeuges mit der Rolle oder Walze.

Die Dauer der Zeitspanne, in der eine Anhaftung durch das Reinigungswerkzeug entfernt wird, kann nach einer einfachen Ausführungsform fest vorgegeben werden. Die Dauer der Zeitspanne kann nach einer optimierten Ausführungsform in Abhängigkeit eines mit der Detektionseinrichtung generierten und für die Anhaftung repräsentativen Signals, beispielsweise aus der anfänglichen Signalstärke, festgelegt oder dynamisch bestimmt wird. Damit bestimmt sich die Zeitspanne im Wesentlichen an der Größe der detektierten Anhaftung. Da die Detektionseinrichtung auf der Reinigungseinrichtung montiert ist, werden ständig ein oder mehrere Signale geliefert, die durch Vergleich mit einem Standardsignal der gereinigten Manteloberfläche der Rolle oder Walze oder aufgrund künstlicher Intelligenz, wie neuronale Netze oder Mustererkennung dynamisch erkennen lassen, wann die Reinigung an einer bestimmten Stelle erfolgreich war, ohne eine zuvor festgelegte Zeitspanne voll ausschöpfen zu müssen. Eine zuvor festgelegte Zeitspanne kann z.B. eine Obergrenze für jede zu reinigende Stelle darstellen.

Da der Zustand des Reinigungswerkzeuges, speziell der Zustand des Reinigungssteines, in der Anlage bzw. der Reinigungseinrichtung vom Bedienpersonal nicht zuverlässig überwacht werden kann, wird auch der Verschleiß des Reinigungswerkzeuges vorzugsweise automatisiert überwacht. Zu diesem Zweck wird mit einem dem Reinigungswerkzeug zugeordneten Verschleißsensor eine Messung des am Reinigungswerkzeuges aufgetretenen Verschleißes durchgeführt und in Abhängigkeit vom ermittelten Verschleiß des Reinigungswerkzeuges bzw. von gemessenen Verschleißwerten die Anstellung des Reinigungswerkzeuges an die Walze oder Rolle gesteuert. Mit Erreichen eines bestimmten Verschleißwertes ergeht eine entsprechende Mitteilung an den Steuerstand der Anlage, die auf den notwendigen Austausch des Reinigungswerkzeuges hinweist.

Nach einer möglichen Ausführungsform erfolgt die Verschleißmessung durch eine Abstandsmessung zwischen Verschleißsensor und der Mantelfläche der Walze oder Rolle.

Die Erfindung betrifft weiters eine Reinigungsvorrichtung zum Reinigen der Oberfläche einer Walze oder einer Rolle, insbesondere einer Treiberrolle, in einer Banderzeugungs- und Bandbehandlungsanlage, mit einem Transportschlitten und einem an einem Tragelement befestigten Reinigungswerkzeug, wobei dem Transportschlitten ein Verstellantrieb zugeordnet und der Transportschlitten an mindestens einer Führung verschiebbar angeordnet ist, die parallel zu einer Drehachse der Walze oder Rolle ausgerichtet ist, und wobei zumindest das Tragelement für das Reinigungswerkzeug oder das Reinigungswerkzeug zum Transportschlitten mittels einer Stelleinrichtung relativbeweglich und an diesem befestigt ist. Eine Einrichtung dieser Art ist aus der WO 01/605566 A1 bekannt und ermöglicht eine laterale Bewegung des Reinigungswerkzeuges entlang der Oberfläche der Walze oder Rolle und dessen Anstellung an diese.

Zur Lösung der eingangs gestellten Aufgabe ist der parallel zur Drehachse der Walze oder Rolle verfahrbaren Reinigungsvorrichtung eine Detektionseinrichtung zur Erkennung von Anhaftungen auf der Walze oder Rolle zugeordnet, dieser Detektionseinrichtung ist eine Auswerteeinrichtung zugeordnet und diese ist mit einem Stellglied am Verstellantrieb des Transportschlittens und mit mindestens einem Stellglied an einer Stelleinrichtung für das Tragelement des Reinigungswerkzeuges oder einer Stelleinrichtung für das Reinigungswerkzeug selbst verbunden.

Vorzugsweise ist die Detektionseinrichtung auf dem Tragelement für das Reinigungswerkzeug angeordnet.

Die Detektionseinrichtung umfasst mindestens einen Sensor zum Erkennen einer Anhaftung. Als besonders geeignet haben sich für das vorliegende Umfeld, in dem diese Sensoren eingesetzt sind, Beschleunigungssensoren, Wirbelstromsensoren, Weggeber oder optische und bildgebende Sensoren herausgestellt. Grundsätzlich ist jeder Sensor einsetzbar, der eine qualitative Beurteilung einer Anhaftung, insbesondere hinsichtlich deren Größe, ermöglicht.

Dem Verstellantrieb für den Transportschlitten ist eine Querpositions-Erkennungseinrichtung zur Positionsbestimmung einer Anhaftung zugeordnet, um bei einem zeitverzögerten Reinigungsdurchlauf eine zielgenaue Positionierung des Reinigungswerkzeuges zu gewährleisten. Die Querpositions-Erkennungseinrichtung ist beispielsweise durch ein Wegverfolgungssystem realisiert.

Vorzugsweise ist die Stelleinrichtung für das Tragelement oder die Stelleinrichtung für das Reinigungswerkzeug für die Einstellung einer vorbestimmten oder mehrerer verschiedener Anstellkräfte oder Anstelldrücke ausgebildet. Beispielsweise ist die Stelleinrichtung von einem Druckmittelzylinder oder einer vorspannbaren Feder gebildet. Damit wird es beim Vorsehen mehrerer verschiedener Anstellkräfte oder Anstelldrücke möglich, während eines Messdurchlaufes der Reinigungseinrichtung sowohl eine Grundreinigung der Walze oder Rolle mit einem vorbestimmten Anpressdruck oder einer vorbestimmten Anpresskraft an der gesamten Mantelfläche durchzuführen als auch an Stellen einer ausgeprägten Anhaftung eine vollständige Entfernung dieser Anhaftung unabhängig von deren Größe durch Aufbringen eines größeren Anpressdruckes oder einer größeren Anpresskraft durchzuführen.

In einer vorteilhaften Weiterbildung der Erfindung ist dem Reinigungswerkzeug ein Verschleißsensor zur Messung des Verschleißes am Reinigungswerkzeug zugeordnet, diesem Verschleißsensor ist eine Auswerteeinrichtung oder eine Regeleinrichtung zugeordnet und diese ist mit einem Stellglied am Verstellantrieb des Transportschlittens und mit mindestens einem Stellglied an der Stelleinrichtung für das Tragelement des Reinigungswerkzeug oder der Stelleinrichtung für das Reinigungswerkzeugs selbst verbunden.

Mit der Einbindung einer Verschleißmessung am Reinigungswerkzeug in den Reinigungsvorgang durch einen Verschleißsensor, wird der Zustand der Reinigungseinrichtung kontinuierlich oder diskontinuierlich verfolgt. Bei Unterschreiten einer Verschleißgrenze kann ein Austausch signalisiert werden. Bei einem plötzlich auftretenden Schaden am Reinigungswerkzeug, beispielsweise einem Bruch des Reinigungswerkzeuges, kann ein plötzliches Zurückziehen des Reinigungswerkzeuges in eine von der Oberfläche der Walze oder Rolle entfernte Position erfolgen. Gegebenenfalls kann auch über das Stellglied am Verstellantrieb des Transportschlittens eine Rückführung der Reinigungseinrichtung in eine Serviceposition erfolgen.

Als Verschleißsensor kommen Unterbrecherkontakte, Widerstandsdrähte, Wärmekontaktsensoren, Kontaktstifte, aber auch eine Zwischenfarbschicht in Signalfarbe in Frage.

Weiters kann am Transportschlitten oder am Tragelement des Reinigungswerkzeuges ein Profilüberwachungssensor zur Überwachung des Profils der Walze oder Rolle angeordnet sein. Damit können während eines Reinigungsdurchlaufes automatisch Informationen über den augenblicklichen Profilverlauf, aber auch eine etwaige Riefenbildung durch die Bandkanten des transportierten Bandes erkannt werden.

Als Profilüberwachungssensoren werden vorwiegend Wirbelstromsensoren, induktive Abstandssensoren, Ultraschallsensoren, kapazitive oder magnetorestriktive Abstandssensoren, berührende Sensoren, oder andere Sensoren, die ein für das Rollenprofil repräsentatives Messsignal generieren, eingesetzt.

Um eine Anpassung der Reinigungseinrichtung an unterschiedliche Walzen- oder Rollendurchmesser ohne große Umbauarbeiten zu ermöglichen, ist der Transportschlitten zweiteilig ausgeführt und einen Sockelteil und einen Verschiebeteil umfasst. Hierbei ist ein Sockelteil mit dem Verstellantrieb verbunden und dieser Sockelteil ermöglicht die Bewegung des Transportschlittens parallel zur Drehachse der Walze oder Rolle. Ein Verschiebeteil, an dem das Tragelement des Reinigungswerkzeuges befestigt ist, ist am Sockelteil in einer Normalebene zur Drehachse, insbesondere in Richtung zur Drehachse der Walze oder Rolle und von ihr weg, verschiebbar und einstellbar angeordnet.

Dem Tragelement für das Reinigungswerkzeug ist ein Anschlag am Transportschlitten zugeordnet, der die Anstellbewegung des Reinigungswerkzeuges an die Walze oder Rolle begrenzt. Dieser Anschlag wirkt als mechanische Sicherheitsvorrichtung.

Das Reinigungswerkzeug umfasst einen Polier- oder Schleifstein. Um bei entsprechender Kraft- oder Druckaufbringung ein gleichmäßiges Anliegen des Reinigungswerkzeuges an der Walze oder Rolle zu gewährleisten, ist das Reinigungswerkzeug raumbeweglich am Transportschlitten aufgehängt. Vorzugsweise wird dies durch Anordnung von zwei Schwenkachsen erreicht, die unter 90° zueinander ausgerichtet sind. Auch eine Abstützung in einer Kugelschale oder Kreuzkopf ist möglich.

### Kurzbeschreibung der Zeichnungen

Weitere Vorteile und Merkmale der vorliegenden Erfindung ergeben sich aus der nachfolgenden Beschreibung nicht einschränkender Ausführungsbeispiele, wobei auf die folgenden Figuren Bezug genommen wird, die folgendes zeigen:
- Fig. 1: eine Seitenansicht der erfindungsgemäßen Reinigungsvorrichtung in einer an eine Treiberrolle angestellten Reinigungsposition,
- Fig. 2: eine erfindungsgemäße Reinigungsvorrichtung in einer Schrägriss-Darstellung.

### Ausführung der Erfindung

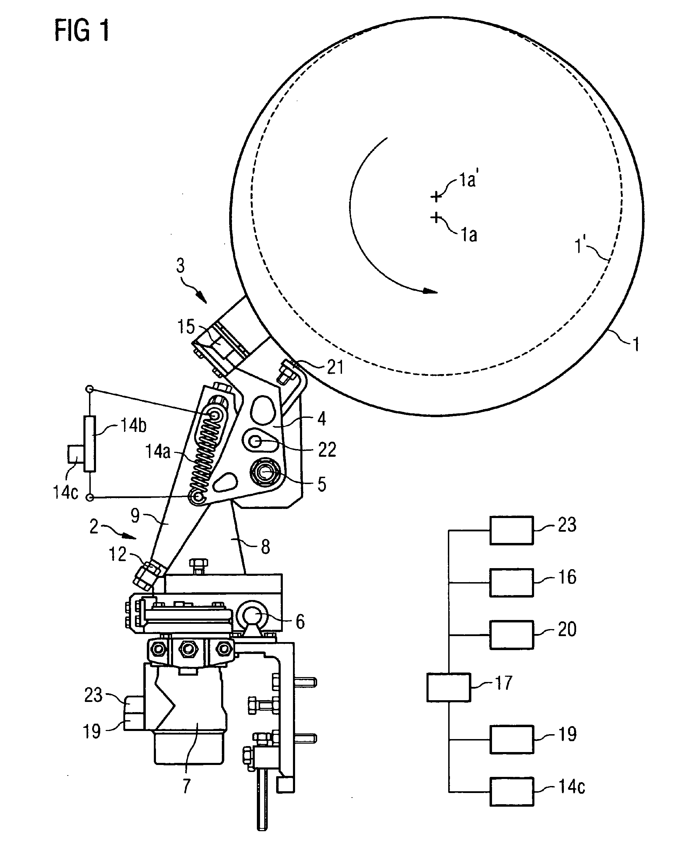

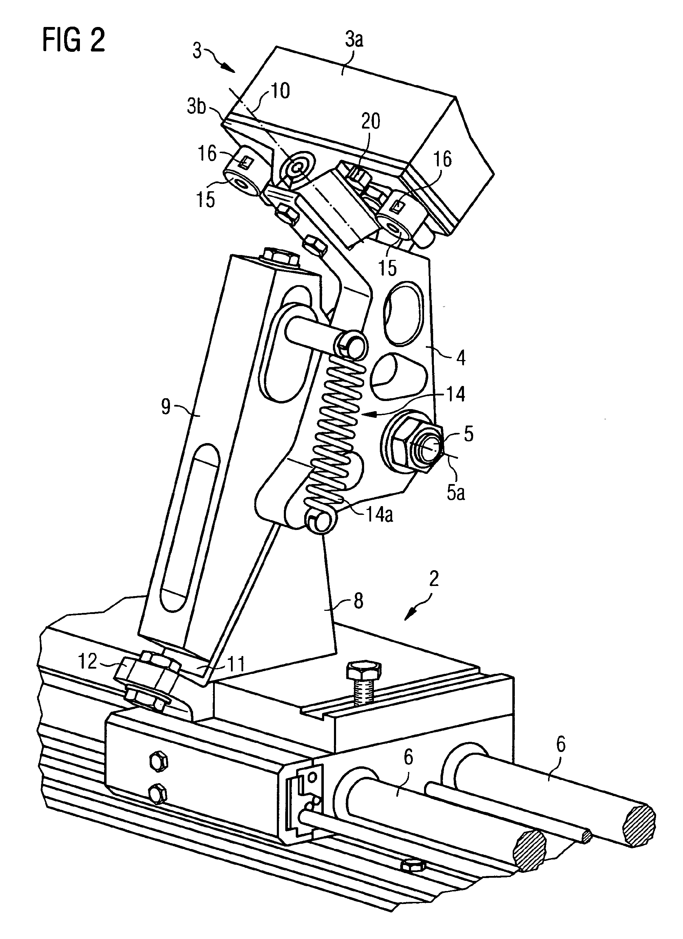

Die Figuren 1 und 2 zeigen in einer schematischen Darstellung beispielhaft den Aufbau einer erfindungsgemäßen Reinigungsvorrichtung für eine Treiberrolle, wie sie in einer Banderzeugungs- und Bandbehandlungsanlage eingesetzt wird, auf die hier nicht näher eingegangen wird.

Die Reinigungseinrichtung ist in Figur 1 in einer an die Mantelfläche einer in Pfeilrichtung um die Drehachse 1a rotierenden Rolle 1 angestellten Betriebsposition dargestellt. Mit einer strichlierten Linie ist der Durchmesser einer kleineren Rolle 1', die um die Drehachse 1a' rotiert, angedeutet, an die die Reinigungseinrichtung ebenfalls angestellt werden könnte.

Die Reinigungseinrichtung umfasst einen Transportschlitten 2, ein von einem Polierstein gebildetes Reinigungswerkzeug 3 und ein Tragelement 4 für das Reinigungswerkzeug, wobei das Tragelement 4 am Transportschlitten 2 über den Schwenkbolzen 5 schwenkbar abgestützt ist. Der Transportschlitten 2 ist an Führungen 6 abgestützt und geführt, die parallel zur Drehachse 1a der Rolle 1 verlaufen. Diese Führungen 6 sind in einem in den Figuren nicht näher dargestellten Tragrahmen eines Treibrollengerüstes fest verankert. Der Transportschlitten 2 wird entlang der Führungen 6 von einem Verstellantrieb 7 bewegt, der in seinen Details nicht näher ausgeführt ist, jedoch dem üblichen Stand der Technik entspricht. Der Verstellantrieb besteht im Wesentlichen aus einem regelbaren Antriebsmotor und einem Getriebe, welches beispielsweise eine Antriebsspindel oder einen Seilzug oder eine über Umlenkräder geführte Transportkette umfassen kann. Damit ist dem Transportschlitten eine Lateralbewegung parallel zur Drehachse 1a der Rolle 1 ermöglicht. Der Transportschlitten 2 ist zweigeteilt und umfasst einen Sockelteil 8, dem die beschriebene Lateralbewegung zugeordnet ist, und ein Verschiebeteil 9, an dem das Tragelement 4 für das Reinigungswerkzeug 3 am Schwenkbolzen 5 abgestützt ist. Das Verschiebeteil 9 ermöglicht eine in einer Normalebene zur Drehachse 1a im Wesentlichen radial zur Rolle 1 bzw. deren Drehachse 1a gerichtete Verstellung oder Bewegung des Reinigungswerkzeuges 3. Der Verschiebeteil 9 ist am Sockelteil 8 an Führungen 11 abgestützt und geführt und in seiner Position durch eine mechanische händisch zu betätigende Stelleinrichtung 12, beispielsweise eine Stellschraube oder aber auch durch einen Druckmittelzylinder, justierbar. Damit ist eine Anpassung der Reinigungsvorrichtung an unterschiedliche Rollendurchmesser möglich.

Der Polierstein 3a ist in einer Werkzeughalterung 3b des Reinigungswerkzeuges 3 befestigt, welches seinerseits am Tragelement 4 um die Schwenkachse 10 innerhalb eines bestimmten keinen Winkelbereiches schwenkbar angelenkt ist. Die Schwenkachse 10 und die Schwenkachse 5a des Schwenkbolzens 5 sind zueinander unter 90° orientiert und ermöglichen somit eine zweidimensionale Ausrichtung des Reinigungswerkzeuges.

Eine Stelleinrichtung 14 ist zwischen Tragelement 4 und dem Transportschlitten 2 beziehungsweise dem Verschiebeteil 9 des Transportschlittens 2 geschalten und steuert die Schwenkbewegung des Tragelementes und damit die Anstellbewegung des Reinigungswerkzeuges 3 an die zu reinigende Rolle 3. Diese Stelleinrichtung 14 kann, wie in Figur 2 dargestellt, von einem Federelement 14 a gebildet sein, wobei die Vorspannkraft des Federelementes den Anpressdruck des Reinigungswerkzeuges an die Rolle bestimmt. Es kann die Stelleinrichtung 14 auch von einem in Figur 1 dargestellten Druckmittelzylinder 14b gebildet sein, sodass ein geregelter Anpressdruck oder eine geregelte Anpresskraft eingestellt werden kann. Zwei Detektionseinrichtungen 15, die jeweils einen Sensor 16 zur Erkennung von Anhaftungen an der Oberfläche der Rolle 1 tragen, sind auf der Werkzeughalterung 3b des Reinigungswerkzeuges 3 angebracht. Messsignale des Sensors 16 werden einer Auswerteeinrichtung 17 zugeführt, dort ausgewertet und in Abhängigkeit von dieser Auswertung in den Messdurchlauf des Reinigungswerkzeuges 3 eingegriffen, dieser unterbrochen und eine Positionierung des Reinigungswerkzeuges 3 vorgenommen. Der Messdurchlauf des Reinigungswerkzeuges wird von der Auswerteeinrichtung 17 kontinuierlich erfasst und über ein Stellglied 19 am Verstellantrieb 7 des Transportschlittens 2 gesteuert. Die Positionierung des Reinigungswerkzeuges 3 erfolgt durch eine entsprechende Ansteuerung des Stellgliedes 14c an der Stelleinrichtung 14 für das Tragelement 4.

Zur Umsetzung einer Betriebsweise, die einen Messdurchlauf zur Detektion und Registrierung von Anhaftungen auf der Walze oder Rolle 1 und einen nachfolgenden Reinigungsdurchlauf zur Entfernung der erkannten Anhaftungen umfasst, ist dem Verstellantrieb 7 eine Querposition-Erkennungseinrichtung 23, welche zweckmäßig von einem Wegverfolgungssystem gebildet ist, zugeordnet. Zusätzlich zum Messsignal der Detektionseinrichtung 15, welches eine qualitative Klassifikation der Anhaftung ermöglicht, wird mit der Querposition-Erkennungseinrichtung 23 ein Positionssignal generiert und der jeweils detektierten Anhaftung in der Auswerteeinrichtung 17 zugeordnet. Damit stehen für den Reinigungsdurchlauf Informationen zum Ort und zur Intensität des durchzuführenden Reinigungsvorganges zur Verfügung.

Auf der Werkzeughalterung 3b des Reinigungswerkzeuges 3 ist ein Verschleißsensor 20 angeordnet, der mit der Auswerteeinrichtung 17 über eine Signalleitung verbunden ist, von der ausgehend sofort oder nach Abschluss des Reinigungsduchlaufes der Reinigungseinrichtung deren Rückführung in eine Ausgangsposition oder eine Serviceposition initiiert wird. Mit dem Verschleißsensor 20 wird festgestellt, ob der Abstand zur Rolle 1 verschleißmäßig über- oder unterkritisch ist. Zweckmäßig zeigt der Verschleißsensor den Verschleißzustand in einer 0 -1 Funktionalität an. Bei Erreichen einer zulässigen Verschleißgrenze wird der Schleifkörper des Reinigungswerkzeuges vorzugsweise gemeinsam mit dem Verschleißsensor gewechselt.

Am Transportschlitten 2 ist ein Profilüberwachungssensor 21 zur Überwachung des Profils der Rolle 1 oder zur Detektion von Riefen, hervorgerufen durch die Bandkanten des transportierten Metallbandes, angeordnet.

Zur Vermeidung einer Kollision des Reinigungswerkzeuges mit der Rolle, die speziell bei einem Bruch des Reinigungssteines auftreten könnte, ist am Transportschlitten 2 ein Anschlag 22 vorgesehen, der die Anstellbewegung des Reinigungswerkzeuges 3 an die Rolle 1 mechanisch begrenzt.

### Bezugszeichenliste:

- 1,1': Rolle
- 1a, 1 a': Drehachse der Rolle 1
- 2: Transportschlitten
- 3: Reinigungswerkzeug
- 3a: Polierstein
- 3b: Werzeughalterung
- 4: Tragelement
- 5: Schwenkbolzen
- 5a: Schwenkachse des Schwenkbolzens
- 6: Führungen des Transportschlittens 2
- 7: Verstellantrieb des Transportschlittens 2
- 8: Sockelteil des Transportschlittens 2
- 9: Verschiebeteil des Transportschlittens 2
- 10: Schwenkachse des Reinigungswerkzeuges 3
- 11: Führungen
- 12: Stelleinrichtung des Verschiebeteils
- 14: Stelleinrichtung des Tragelementes 4
- 14a: Federelement
- 14b: Druckmittelzylinder
- 14c: Stellglied der Stelleinrichtung des Tragelementes
- 15: Detektionseinrichtung
- 16: Sensor der Detektionseinrichtung
- 17: Auswerteeinrichtung
- 19: Stellglied am Verstellantrieb 7
- 20: Verschleißsensor
- 21: Profilüberwachungssensor
- 22: Anschlag
- 23: Querposition-Erkennungseinrichtung

## Patentansprüche

1. Verfahren zum Reinigen der Mantelfläche einer Walze oder einer Rolle (1), insbesondere einer Treiberrolle, in Banderzeugungs- und Bandbehandlungsanlagen, wobei Anhaftungen auf der Mantelfläche der Walze oder Rolle mit einer Detektionseinrichtung (15) erkannt werden und ein zur Mantelfläche der Walze oder Rolle anstellbares Reinigungswerkzeug (3) entlang dieser Mantelfläche bewegt wird und diese Anhaftungen bei rotierender Walze oder Rolle beseitigt, **dadurch gekennzeichnet,**
**dass** die Detektionseinrichtung (15) gemeinsam mit dem Reinigungswerkzeug (3) entlang der Mantelfläche der Walze oder Rolle geführt wird, und
**dass** die mit der Detektionseinrichtung (15) erkannten eine oder mehrere Anhaftungen auf der Mantelfläche der Walze oder Rolle anschließend mit dem Reinigungswerkzeug (3) entfernt werden, wobei die Anstellbewegung des Reinigungswerkzeugs (3) von einer Stelleinrichtung (14), welche mit einer der Detektionseinrichtung (15) zugeordneten Auswerteeinrichtung verbunden ist, bewirkt wird.

2. Verfahren nach Anspruch 1, **dadurch gekennzeichnet, dass** die Detektionseinrichtung (15) gemeinsam mit dem Reinigungswerkzeug (3) berührend entlang der Mantelfläche der Walze oder Rolle geführt wird.

3. Verfahren nach Anspruch 1 oder 2, **dadurch gekennzeichnet, dass** ein von der Detektionseinrichtung (15) generiertes für die ermittelte Anhaftung repräsentatives Signal einer Auswerteeinrichtung (17) zugeführt, dort ausgewertet und in Abhängigkeit von dieser Auswertung die Positionierung des Reinigungswerkzeuges (3) an der Mantelfläche der Walze oder Rolle gesteuert wird.

4. Verfahren nach Anspruch 3, **dadurch gekennzeichnet, dass** das für die ermittelte Anhaftung repräsentative Signal mit einem Identifikationsprogramm ausgewertet wird.

5. Verfahren nach einem der vorhergehenden Ansprüche, **dadurch gekennzeichnet, dass** das während des Detektionsvorganges in einem Abstand zur Mantelfläche der Walze oder Rolle gehaltene Reinigungswerkzeug (3) nach der Detektion einer Anhaftung auf der Walze oder Rolle (1) an diese angestellt und diese Anhaftung beseitigt wird.

6. Verfahren nach Anspruch 5, **dadurch gekennzeichnet, dass** das Reinigungswerkzeug (3) mit einer konstanten Kraft oder mit einem konstanten Druck an die Mantelfläche der Walze oder Rolle (1) angepresst wird und für eine Zeitspanne in dieser Position gehalten wird.

7. Verfahren nach einem der vorhergehenden Ansprüche 1 bis 4, **dadurch gekennzeichnet, dass** das während des Detektionsvorganges mit einer konstanten Kraft oder einem konstanten Druck an die Mantelfläche der Walze oder Rolle (1) angepresste Reinigungswerkzeug (3) nach der Detektion einer Anhaftung auf der Walze oder Rolle über eine Zeitspanne in dieser Position gehalten wird.

8. Verfahren nach einem der vorhergehenden Ansprüche 1 bis 4 und 7,
**dadurch gekennzeichnet, dass** das während des Detektionsvorganges mit einer konstanten Kraft oder einem konstanten Druck an die Mantelfläche der Walze oder Rolle (1) angepresste Reinigungswerkzeug (3) nach der Detektion einer Anhaftung auf der Walze oder Rolle mit einer erhöhten Kraft oder einem erhöhten Druck über eine Zeitspanne in dieser Position gehalten wird.

9. Verfahren nach einem der vorhergehenden Ansprüche, **dadurch gekennzeichnet, dass** das Reinigungswerkzeug (3) während der Entfernung einer Anhaftung oszillierend bewegt wird.

10. Verfahren nach Anspruch 9, **dadurch gekennzeichnet, dass** die oszillierende Bewegung des Reinigungswerkzeuges (3) parallel zur Drehachse (1 a) der Rolle oder Walze mit einem Oszillationshub erfolgt, der zwischen 2 und 30 %, vorzugsweise zwischen 5 und 20 % der Breite des Reinigungswerkzeuges gemessen an der Kontaktfläche des Reinigungswerkzeuges mit der Rolle oder Walze beträgt.

11. Verfahren nach einem der vorhergehenden Ansprüche, **dadurch gekennzeichnet, dass** eine Zeitspanne, in der mit dem Reinigungswerkzeug (3) eine Anhaftung entfernt wird, in Abhängigkeit einer mit der Detektionseinrichtung (15) generierten und für die Anhaftung repräsentativen anfänglichen Signalstärke festgelegt oder dynamisch bestimmt wird.

12. Verfahren nach einem der vorhergehenden Ansprüche, **dadurch gekennzeichnet, dass** die Detektion einer oder mehrerer Anhaftungen auf der Walze oder Rolle (1) und die Entfernung dieser einen oder mehreren Anhaftungen in einem einzigen Durchlauf des Reinigungswerkzeuges (3) erfolgt.

13. Verfahren nach einem der vorhergehenden Ansprüche 1 bis 11, **dadurch gekennzeichnet, dass** die Detektion einer oder mehrerer Anhaftungen auf der Walze oder Rolle (1) in einem Messdurchlauf erfolgt, dass zu jeder Detektion einer Anhaftung eine Querpositionserkennung durchgeführt wird und dass die Entfernung der einen oder mehrerer Anhaftungen in einem nachfolgenden Reinigungsdurchlauf des Reinigungswerkzeuges (3) erfolgt.

14. Verfahren nach einem der vorhergehenden Ansprüche, **dadurch gekennzeichnet, dass** mit einem dem Reinigungswerkzeug (3) zugeordneten Verschleißsensor (20) eine Messung des am Reinigungswerkzeug (3) aufgetretenen Verschleißes durchgeführt wird und in Abhängigkeit vom ermittelten Verschleiß des Reinigungswerkzeuges die Anstellung des Reinigungswerkzeuges (3) an die Walze oder Rolle (1) gesteuert wird.

15. Verfahren nach Anspruch 14, **dadurch gekennzeichnet, dass** die Verschleißmessung durch eine Abstandsmessung zwischen Verschleißsensor (20) und Mantelfläche der Walze oder Rolle (1) erfolgt.

16. Reinigungsvorrichtung zum Reinigen der Mantelfläche einer Walze oder einer Rolle (1), insbesondere einer Treiberrolle, in einer Banderzeugungs- und Bandbehandlungsanlage, mit einem Transportschlitten (2) und einem an einem Tragelement (4) befestigten Reinigungswerkzeug (3), wobei dem Transportschlitten (2) ein Verstellantrieb (7) zugeordnet und der Transportschlitten (2) an mindestens einer Führung (6) verschiebbar angeordnet ist, die parallel zu einer Drehachse (1a) der Walze oder Rolle (1) ausgerichtet ist, und wobei zumindest das Tragelement (4) für das Reinigungswerkzeug (3) oder das Reinigungswerkzeug (3) zum Transportschlitten (2) mittels einer Stelleinrichtung (14) relativbeweglich und an diesem befestigt ist, **dadurch gekennzeichnet, dass** der parallel zur Drehachse (1a) der Walze oder Rolle (1) verfahrbaren Reinigungsvorrichtung (3) eine Detektionseinrichtung (15) zur Erkennung von Anhaftungen auf der Walze oder Rolle (1) zugeordnet ist, dieser Detektionseinrichtung (15) eine Auswerteeinrichtung (17) zugeordnet und diese mit einem Stellglied (19) am Verstellantrieb (7) des Transportschlittens (2) und mit mindestens einem Stellglied (14c) an einer Stelleinrichtung (14) für das Tragelement (4) des Reinigungswerkzeuges (3) oder einer Stelleinrichtung für das Reinigungswerkzeug selbst verbunden ist.

17. Reinigungsvorrichtung nach Anspruch 16, **dadurch gekennzeichnet, dass** die Detektionseinrichtung (15) auf dem Tragelement (4) für das Reinigungswerkzeug (3) angeordnet ist.

18. Reinigungsvorrichtung nach Anspruch 16 oder 17, **dadurch gekennzeichnet, dass** die Detektionseinrichtung (15) einen Sensor (16) zum Erkennen einer Anhaftung umfasst.

19. Reinigungseinrichtung nach einem der Ansprüche 16 bis 18, **dadurch gekennzeichnet, dass** dem Verstellantrieb (7) eine Querposition-Erkennungseinrichtung (23), beispielsweise ein Wegverfolgungssystem, zugeordnet ist.

20. Reinigungsvorrichtung nach einem der Ansprüche 16 bis 19, **dadurch gekennzeichnet, dass** die Stelleinrichtung (14) für das Tragelement (4) oder die Stelleinrichtung für das Reinigungswerkzeug für die Einstellung einer vorbestimmten oder mehrerer verschiedener Anstellkräfte oder -drücke ausgebildet ist, beispielsweise von einem Druckmittelzylinder (14b) oder einer vorspannbaren Feder (14a) gebildet ist.

21. Reinigungsvorrichtung nach einem der Ansprüche 16 bis 20, **dadurch gekennzeichnet, dass** dem Reinigungswerkzeug (3) ein Verschleißsensor (20) zur Messung des Verschleißes am Reinigungswerkzeug zugeordnet ist, dass diesem Verschleißsensor (20) eine Auswerteeinrichtung (17) oder eine Regeleinrichtung zugeordnet ist und diese mit einem Stellglied (19) am Verstellantrieb (7) des Transportschlittens (2) und mit mindestens einem Stellglied (14c) an der Stelleinrichtung (14) für das Tragelement (4) des Reinigungswerkzeug (3) oder der Stelleinrichtung für das Reinigungswerkzeugs selbst verbunden ist.

22. Reinigungsvorrichtung nach einem der Ansprüche 16 bis 21, **dadurch gekennzeichnet, dass** am Transportschlitten (2) oder am Tragelement (4) des Reinigungswerkzeuges (3) ein Profilüberwachungssensor (21) zur Überwachung des Profils der Walze oder Rolle (1) angeordnet ist.

23. Reinigungsvorrichtung nach einem der Ansprüche 16 bis 22, **dadurch gekennzeichnet, dass** der Transportschlitten (2) zweiteilig ausgeführt ist und einen Sockelteil (8) und einen Verschiebeteil (9) umfasst, wobei der Sockelteil (8) mit dem Verstellantrieb (7) verbunden ist und der Sockelteil (8) die Bewegung des Transportschlittens (2) parallel zur Drehachse (1a) der Walze oder Rolle (1) ermöglicht und wobei ein Verschiebeteil (9), an dem das Tragelement (4) des Reinigungswerkzeuges (3) befestigt ist, am Sockelteil (8) in einer Normalebene zur Drehachse, insbesondere in Richtung zur Drehachse (1 a) der Walze oder Rolle (1) und von ihr weg, verschiebbar und einstellbar angeordnet ist.

24. Reinigungsvorrichtung nach einem der Ansprüche 16 bis 23, **dadurch gekennzeichnet, dass** dem Tragelement (4) ein Anschlag (22) am Transportschlitten (2) zugeordnet ist der die Anstellbewegung des Reinigungswerkzeuges (3) an die Walze oder Rolle begrenzt.

25. Reinigungsvorrichtung nach einem der Ansprüche 16 bis 24, **dadurch gekennzeichnet, dass** das Reinigungswerkzeug (3) raumbeweglich, vorzugsweise an zwei normal aufeinander ausgerichteten Schwenkachsen (5a, 10) am Transportschlitten (2) aufgehängt ist.

## Claims

1. Method for cleaning the outer surface of a roll or roller (1), in particular a pinch roller, in strip-producing and strip-treating installations, wherein deposits on the outer surface of the roll or roller are detected by a detection device (15) and a cleaning tool (3) which can be placed against the outer surface of the roll or roller is moved along this outer surface and these deposits are removed while the roll or roller is rotating, **characterized**
**in that** the detection device (15) is guided together with the cleaning tool (3) along the outer surface of the roll or roller, and
**in that** the one or more deposits on the outer surface of the roll or roller detected by the detection device (15) are subsequently removed by the cleaning tool (3), the placement movement of the cleaning tool (3) being brought about by a positioning device (14), which is connected to an evaluation device assigned to the detection device (15).

2. Method according to Claim 1, **characterized in that** the detection device (15) is guided together with the cleaning tool (3) along, and while touching, the outer surface of the roll or roller.

3. Method according to Claim 1 or 2, **characterized in that** a signal that is generated by the detection device (15) and is representative of the deposit determined is fed to an evaluation device (17), evaluated there and the positioning of the cleaning tool (3) on the outer surface of the roll or roller is controlled on the basis of this evaluation.

4. Method according to Claim 3, **characterized in that** the signal that is representative of the deposit determined is evaluated by an identification program.

5. Method according to one of the preceding claims, **characterized in that** the cleaning tool (3) held at a distance from the outer surface of the roll or roller during the detection process is placed against the roll or roller (1) after the detection of a deposit on the latter and this deposit is removed.

6. Method according to Claim 5, **characterized in that** the cleaning tool (3) is pressed against the outer surface of the roll or roller (1) with a constant force or with a constant pressure and is kept in this position for a period of time.

7. Method according to one of the preceding Claims 1 to 4, **characterized in that** the cleaning tool (3) pressed against the outer surface of the roll or roller (1) with a constant force or a constant pressure during the detection process is kept in this position for a period of time after the detection of a deposit on the roll or roller.

8. Method according to one of the preceding Claims 1 to 4 and 7, **characterized in that** the cleaning tool (3) pressed against the outer surface of the roll or roller (1) with a constant force or a constant pressure during the detection process is kept in this position with an increased force or increased pressure for a period of time after the detection of a deposit on the roll or roller.

9. Method according to one of the preceding claims, **characterized in that** the cleaning tool (3) is moved in an oscillating manner during the removal of a deposit.

10. Method according to Claim 9, **characterized in that** the oscillating movement of the cleaning tool (3) takes place parallel to the axis of rotation (1a) of the roller or with an oscillating sweep which is between 2 and 30%, preferably
between 5 and 20%, of the width of the cleaning tool, measured on the contact surface of the cleaning tool with the roller or roll.

11. Method according to one of the preceding claims, **characterized in that** the time period in which a deposit is removed by the cleaning tool (3) is set or dynamically determined on the basis of an initial signal strength that is generated by the detection device (15) and is representative of the deposit.

12. Method according to one of the preceding claims, **characterized in that** the detection of one or more deposits on the roll or roller (1) and the removal of these one or more deposits take place in a single run of the cleaning tool (3).

13. Method according to of the preceding claims 1 to 11, **characterized in that** the detection of one or more deposits on the roll or roller (1) takes place in a measuring run, **in that** for each detection of a deposit a transverse-position detection is carried out and **in that** the removal of the one or more deposits takes place in a subsequent cleaning run of the cleaning tool (3).

14. Method according to one of the preceding claims, **characterized in that** a measurement of the wear that has occurred on the cleaning tool (3) is carried out by a wear sensor (20) assigned to the cleaning tool (3) and the placing of the cleaning tool (3) against the roll or roller (1) is controlled on the basis of the determined wear of the cleaning tool.

15. Method according to Claim 14, **characterized in that** the wear measurement is performed by a distance measurement between the wear sensor (20) and the outer surface of the roll or roller (1).

16. Cleaning device for cleaning the outer surface of a roll or roller (1), in particular a pinch roller, in a strip-producing and strip-treating installation, with a transporting carriage (2) and a cleaning tool (3) fastened to a carrying element (4), the
transporting carriage (2) being assigned a positioning drive (7) and the transporting carriage (2) being arranged displaceably on at least one guide (6) which is aligned parallel to an axis of rotation (1a) of the roll or roller (1), and at least the carrying element (4) for the cleaning tool (3) or the cleaning tool (3) being relatively movable in relation to the transporting carriage (2) by means of a positioning device (14) and fastened to the latter, **characterized in that** the cleaning device (3) that can be made to move parallel to the axis of rotation (1a) of the roll or roller (1) is assigned a detection device (15) for detecting deposits on the roll or roller (1), this detection device (15) is assigned an evaluation device (17) and this evaluation device is connected to a positioning element (19) on the positioning drive (7) of the transporting carriage (2) and to at least one positioning element (14c) on a positioning device (14) for the carrying element (4) of the cleaning tool (3) or a positioning device for the cleaning tool itself.

17. Cleaning device according to Claim 16, **characterized in that** the detection device (15) is arranged on the carrying element (4) for the cleaning tool (3).

18. Cleaning device according to Claim 16 or 17, **characterized in that** the detection device (15) comprises a sensor (16) for detecting a deposit.

19. Cleaning device according to one of Claims 16 to 18, **characterized in that** the positioning drive (7) is assigned a transverse-position detecting device (23), for example a displacement tracking system.

20. Cleaning device according to one of Claims 16 to 19, **characterized in that** the positioning device (14) for the carrying element (4) or the positioning device for the
cleaning tool is designed for the setting of a predetermined placement force or placement pressure or a number of different placement forces or placement pressures, for example is formed by a pressure-medium cylinder (14b) or a pretensionable spring (14a).

21. Cleaning device according to one of Claims 16 to 20, **characterized in that** the cleaning tool (3) is assigned a wear sensor (20) for measuring the wear on the cleaning tool, **in that** this wear sensor (20) is assigned an evaluation device (17) or a control device and this control device is connected to a positioning element (19) on the positioning drive (7) of the transporting carriage (2) and to at least one positioning element (14c) on the positioning device (14) for the carrying element (4) of the cleaning tool (3) or the positioning device for the cleaning tool itself.

22. Cleaning device according to one of Claims 16 to 21, **characterized in that** a profile monitoring sensor (21) is arranged on the transporting carriage (2) or on the carrying element (4) of the cleaning tool (3) for monitoring the profile of the roll or roller (1).

23. Cleaning device according to one of Claims 16 to 22, **characterized in that** the transporting carriage (2) is of a two-part configuration and comprises a base part (8) and a displacing part (9), the base part (8) being connected to the positioning drive (7) and the base part (8) making it possible for the transporting carriage (2) to move parallel to the axis of rotation (1a) of the roll or roller (1), and a displacing part (9) to which the carrying element (4) of the cleaning tool (3) is fastened being arranged on the base part (8) in such a way that it can be displaced and set in a plane normal to the axis of rotation, in particular in the direction of the axis of rotation (1a) of the roll or roller (1) and away from it.

24. Cleaning device according to one of Claims 16 to 23, **characterized in that** the carrying element (4) is assigned a stop (22) on the transporting carriage (2), which stop
limits the placing movement of the cleaning tool (3) against the roll or roller.

25. Cleaning device according to one of Claims 16 to 24, **characterized in that** the cleaning tool (3) is suspended in a spatially movable manner on the transporting carriage (2), preferably at two pivot axes (5a, 10) aligned normal to one another.

## Revendications

1. Procédé de nettoyage de la surface d'enveloppe d'un cylindre ou d'un rouleau (1), notamment d'un rouleau d'entraînement, dans des installations de traitement et de production de bandes, des adhérences sur la surface d'enveloppe du cylindre ou du rouleau étant détectées à l'aide d'un dispositif de détection (15) et un outil de nettoyage (3) placé contre la surface d'enveloppe du cylindre ou du rouleau étant déplacé le long de cette surface d'enveloppe et ces adhérences étant éliminées lors de la rotation du cylindre ou du rouleau ; **caractérisé en ce que** :
le dispositif de détection (15) est guidé conjointement avec l'outil de nettoyage (3) le long de la surface d'enveloppe du cylindre ou du rouleau ; et
la ou les adhérences détectées à l'aide du dispositif de détection (15) sur la surface d'enveloppe du cylindre ou du rouleau sont ensuite retirées à l'aide de l'outil de nettoyage (3), le mouvement de mise en place de l'outil de nettoyage (3) étant produit par un dispositif de réglage (14) relié à un dispositif d'analyse associé au dispositif de détection (15).

2. Procédé selon la revendication 1, **caractérisé en ce que** le dispositif de détection (15) est guidé en contact conjointement avec l'outil de nettoyage (3) le long de la surface d'enveloppe du cylindre ou du rouleau.

3. Procédé selon la revendication 1 ou 2, **caractérisé en ce qu'**un signal généré par le dispositif de détection (15) et représentatif de l'adhérence déterminée est amené à un dispositif d'analyse (17) pour y être analysé et **en ce que** le positionnement de l'outil de nettoyage (3) contre la surface d'enveloppe du cylindre ou du rouleau est commandé en fonction de cette analyse.

4. Procédé selon la revendication 3, **caractérisé en ce que** le signal représentatif de l'adhérence déterminée est analysé à l'aide d'un programme d'identification.

5. Procédé selon l'une quelconque des revendications précédentes, **caractérisé en ce que** l'outil de nettoyage (3) maintenu à une certaine distance de la surface d'enveloppe du cylindre ou du rouleau pendant le processus de détection est appuyé contre celle-ci après détection d'une adhérence sur le cylindre ou le rouleau (1) et **en ce que** cette adhérence est éliminée.

6. Procédé selon la revendication 5, **caractérisé en ce que** l'outil de nettoyage (3) est comprimé contre la surface d'enveloppe du cylindre ou du rouleau (1) avec une force constante ou avec une pression constante et **en ce qu'**il est maintenu dans cette position pendant un certain temps.

7. Procédé selon l'une quelconque des revendications précédentes 1 à 4, **caractérisé en ce que** l'outil de nettoyage (3) comprimé contre la surface d'enveloppe du cylindre ou du rouleau (1) avec une force constante ou une pression constante pendant le processus de détection est maintenu pendant un certain temps dans cette position après détection d'une adhérence sur le cylindre ou le rouleau.

8. Procédé selon l'une quelconque des revendications précédentes 1 à 4 et 7, **caractérisé en ce que** l'outil de nettoyage (3) comprimé contre la surface d'enveloppe du cylindre ou du rouleau (1) avec une force constante ou une pression constante pendant le processus de détection est maintenu pendant un certain temps dans cette position après détection d'une adhérence sur le cylindre ou le rouleau avec une force accrue.

9. Procédé selon l'une quelconque des revendications précédentes, **caractérisé en ce que** l'outil de nettoyage (3) est déplacé en suivant un mouvement oscillant pendant le processus de retrait d'une adhérence.

10. Procédé selon la revendication 9, **caractérisé en ce que** le mouvement oscillant de l'outil de nettoyage (3) se produit parallèlement à l'axe de rotation (1a) du rouleau ou du cylindre en réalisant une course oscillante comprise entre 2 et 30 %, de préférence entre 5 et 20 %, de la largeur de l'outil de nettoyage, cette course étant mesurée au niveau de la surface de contact de l'outil de nettoyage avec le rouleau ou le cylindre.

11. Procédé selon l'une quelconque des revendications précédentes, **caractérisé en ce qu'**un intervalle de temps pendant lequel une adhérence est retirée à l'aide de l'outil de nettoyage (3) est déterminé au préalable ou de façon dynamique en fonction de la force initiale du signal généré à l'aide du dispositif de détection (15) et représentatif de l'adhérence.

12. Procédé selon l'une quelconque des revendications précédentes, **caractérisé en ce que** la détection d'une ou de plusieurs adhérences sur le cylindre ou le rouleau (1) et le retrait de cette ou de ces adhérences se produisent au cours d'un seul passage de l'outil de nettoyage (3).

13. Procédé selon l'une quelconque des revendications précédentes 1 à 11, **caractérisé en ce que** la détection d'une ou de plusieurs adhérences sur le cylindre ou le rouleau (1) se produit au cours d'un passage de mesure, **en ce qu'**à chaque détection d'une adhérence, une détection de la position transversale est réalisée et **en ce que** le retrait de la ou des adhérences est réalisé au cours d'un passage de nettoyage ultérieur de l'outil de nettoyage (3).

14. Procédé selon l'une quelconque des revendications précédentes, **caractérisé en ce qu'**une mesure de l'usure de l'outil de nettoyage (3) est réalisée à l'aide d'un capteur d'usure (20) associé à l'outil de nettoyage (3) et **en ce que** le placement de l'outil de nettoyage (3) contre le cylindre ou le rouleau (1) est commandé en fonction de l'usure déterminée de l'outil de nettoyage.

15. Procédé selon la revendication 14, **caractérisé en ce que** la mesure de l'usure se produit par le biais d'une mesure d'écartement entre le capteur d'usure (20) et la surface d'enveloppe du cylindre ou du rouleau (1).

16. Dispositif de nettoyage servant au nettoyage de la surface d'enveloppe d'un cylindre ou d'un rouleau (1), notamment d'un rouleau d'entraînement, dans une installation de traitement et de production de bandes, avec un coulisseau de transport (2) et un outil de nettoyage (3) fixé à un élément porteur (4), un entraînement par coulissement (7) étant associé au coulisseau de transport (2) et le coulisseau de transport (2) étant disposé de façon à pouvoir coulisser contre au moins un guide (6) orienté parallèlement à un axe de rotation (1a) du cylindre ou du rouleau (1) et au moins l'élément porteur (4) de l'outil de nettoyage (3) ou l'outil de nettoyage (3) étant mobile par rapport au coulisseau de transport (2) à l'aide d'un dispositif de réglage (14) et étant fixé à lui, **caractérisé en ce qu'**un dispositif de détection (15) servant à détecter des adhérences sur le cylindre ou le rouleau (1) est associé au dispositif de nettoyage (3) mobile parallèlement à l'axe de rotation (1a) du cylindre ou du rouleau (1), un dispositif d'analyse (17) étant associé audit dispositif de détection (15) et celui-ci étant relié à un élément de réglage (19) au niveau de l'entraînement par coulissement (7) du coulisseau de transport (2) et à au moins un élément de réglage (14c) au niveau d'un dispositif de réglage (14) de l'élément porteur (4) de l'outil de nettoyage (3) ou d'un dispositif de réglage de l'outil de nettoyage lui-même.

17. Dispositif de nettoyage selon la revendication 16, **caractérisé en ce que** le dispositif de détection (15) est disposé sur l'élément porteur (4) de l'outil de nettoyage (3).

18. Dispositif de nettoyage selon la revendication 16 ou 17, **caractérisé en ce que** le dispositif de détection (15) comprend un capteur (16) de détection d'une adhérence.

19. Dispositif de nettoyage selon l'une quelconque des revendications 16 à 18, **caractérisé en ce qu'**un dispositif de détection de position transversale (23), par exemple un système de suivi de course, est associé à l'entraînement par coulissement (7).

20. Dispositif de nettoyage selon l'une quelconque des revendications 16 à 19, **caractérisé en ce que** le dispositif de réglage (14) de l'élément porteur (4) ou le dispositif de réglage de l'outil de nettoyage est réalisé pour régler une ou plusieurs forces ou pressions d'appui prédéterminées, exercées par exemple par un cylindre de moyen de pression (14b) ou un ressort (14a) précompressible.

21. Dispositif de nettoyage selon l'une quelconque des revendications 16 à 20, **caractérisé en ce qu'**un capteur d'usure (20) est associé à l'outil de nettoyage (3) pour mesurer l'usure de l'outil de nettoyage, **en ce qu'**un dispositif d'analyse (17) ou un dispositif de réglage est associé à ce capteur d'usure (20) et **en ce que** ce dispositif est relié à un élément de réglage (19) placé au niveau de l'entraînement par coulissement (7) du coulisseau de transport (2) et à au moins un élément de réglage (14c) placé au niveau du dispositif de réglage (14) de l'élément porteur (4) de l'outil de nettoyage (3) ou du dispositif de réglage de l'outil de nettoyage lui-même.

22. Dispositif de nettoyage selon l'une quelconque des revendications 16 à 21, **caractérisé en ce qu'**un capteur de surveillance de profil (21) est disposé au niveau du coulisseau de transport (2) ou au niveau de l'élément porteur (4) de l'outil de nettoyage (3) pour surveiller le profil du cylindre ou du rouleau (1).

23. Dispositif de nettoyage selon l'une quelconque des revendications 16 à 22, **caractérisé en ce que** le coulisseau de transport (2) est réalisé en deux parties et comprend une partie de socle (8) et une partie coulissante (9), la partie de socle (8) étant reliée à l'entraînement par coulissement (7) et la partie de socle (8) permettant le déplacement du coulisseau de transport (2) parallèlement à l'axe de rotation (1a) du cylindre ou du rouleau (1) et une partie coulissante (9) à laquelle est fixé l'élément porteur (4) de l'outil de nettoyage (3) est disposée de façon coulissante et réglable au niveau de la partie de socle (8) dans un plan perpendiculaire à l'axe de rotation, notamment en direction de l'axe de rotation (1a) du cylindre ou du rouleau (1) et dans la direction s'en écartant.

24. Dispositif de nettoyage selon l'une quelconque des revendications 16 à 23, **caractérisé en ce qu'**une butée (22) placée contre le coulisseau de transport (2) est associée à l'élément porteur (4), ladite butée limitant le mouvement de positionnement de l'outil de nettoyage (3) contre le cylindre ou le rouleau.

25. Dispositif de nettoyage selon l'une quelconque des revendications 16 à 24, **caractérisé en ce que** l'outil de nettoyage (3) est mobile dans l'espace, de préférence suspendu au niveau de deux axes de pivotement (5a, 10) orientés perpendiculairement l'un à l'autre au niveau du coulisseau de transport (2).
